# EUROPEAN PATENT APPLICATION

(11) **EP 4 844 843 A1**
(43) Date of publication of application: **25.11.2026**
(21) Application number: 26178847.5
(22) Date of filing: 15.05.2026
(51) Int. Cl.: H01M 4/66, C25D 5/02, C25D 5/44, C25D 7/06, H01M 10/0525, C25D 3/12

(54) **COLLECTOR, METHOD OF MANUFACTURING COLLECTOR, AND BATTERY**

(30) Priority: 19.05.2025 JP 2025083579
(71) Applicant: Toyota Jidosha Kabushiki Kaisha, Toyota-shi, Aichi-ken 471-8571 (JP)
(72) Inventor: WASEDA, Tetsuya, Toyota-shi, Aichi-ken 471-8571 (JP)
(74) Representative: Winter, Brandl - Partnerschaft mbB

(57) **Abstract**

The collector has a first region having a first layer and a second layer, and a second region including a portion of the first layer and at which either the second layer is not disposed or a thickness of the second layer is thinner than a thickness of the second layer in the first region. The first layer contains a light metal element. The second layer is disposed on a surface of the first layer, and contains a metal element whose oxidation-reduction potential based on Li is 2.3 V or more and that is other than an amphoteric element. The method of manufacturing the collector and the battery utilizing the collector are also disclosed.

## Description

### BACKGROUND

### Technical Field

The present disclosure relates to a collector, a method of manufacturing a collector, and a battery.

### Related Art

An electrode of a secondary battery such as a lithium ion secondary battery generally includes a member, which is called a collector and contains a metal, and an electrode layer, which is disposed on the collector and contains an electrode active material.

In recent years, attempts have been made to substitute copper, which is widely used as a material of collectors of negative electrodes, with other metals in order to reduce the cost of manufacturing batteries and decrease the weight of the batteries.

For example, there is known a method of manufacturing a negative electrode collector in which, in a secondary battery using an electrolyte liquid, a covering film formed of nickel or copper is formed on an aluminum foil in order to suppress alloying with lithium caused by the electrolyte liquid (Japanese Patent Application Laid-Open (JP-A) No. 2018-116910).

### SUMMARY

In a collector in which a covering film is formed, it is difficult to achieve both suppression of alloying with lithium resulting from lithium ions, and the joining of a terminal. For example, if, in a collector, the covering film is made to be thick in order to suppress alloying with lithium, the covering film is not peeled off by ultrasonic waves, and a terminal cannot be joined. On the other hand, if the covering film is made to be thin, there are cases in which the aluminum foil is cut by ultrasonic waves. It is necessary to adjust the thickness of the covering film and the ultrasonic wave energy in accordance with the structure of the collector.

A topic that an embodiment of the present disclosure addresses is the provision of a collector that highly reliably realizes suppression of alloying with lithium and good terminal connection. Further, a topic that an embodiment of the present disclosure addresses is the provision of a method of manufacturing a collector that highly reliably realizes suppression of alloying with lithium and good terminal connection. Moreover, a topic that an embodiment of the present disclosure addresses is the provision of a battery using a collector that highly reliably realizes suppression of alloying with lithium and good terminal connection.

Means for addressing these topics include the following aspects.

A first aspect of the present disclosure provides a collector including: a first region having a first layer and a second layer; and a second region including a portion of the first layer, and at which either the second layer is not disposed or a thickness of the second layer is thinner than a thickness of the second layer in the first region, wherein the first layer contains a light metal element, and the second layer is disposed on a surface of the first layer, and contains a metal element whose oxidation-reduction potential based on Li is 2.3 V or more and that is other than an amphoteric element.

A second aspect of the present disclosure provides the collector of the first aspect, wherein the first region has a first joined portion to which an electrode layer is joined, and the second region has a second joined portion to which an electrode tab is joined.

A third aspect of the present disclosure provides the collector of the first or second aspect, wherein the thickness of the second layer in the first region is 0.5 µm or more.

A fourth aspect of the present disclosure provides the collector of any one of the first to third aspects, wherein, in a case in which the second layer is disposed at the second region, a thickness of the second layer in the second region is 50% or less of the thickness of the second layer in the first region.

A fifth aspect of the present disclosure provides the collector of any one of the first to fourth aspects, wherein, in a case in which the second layer is disposed at the second region, a thickness of the second layer in the second region is 0.5 µm or less.

A sixth aspect of the present disclosure provides the collector of any one of the first to fifth aspect, wherein the light metal element is Al.

A seventh aspect of the present disclosure provides the collector of any one of the first to sixth aspect, wherein the metal element includes at least one selected from the group consisting of Ni, Cr and Fe.

An eighth aspect of the present disclosure provides the collector of any one of the first to seventh aspect, wherein the first region has a third layer disposed on a surface of the second layer, and the third layer contains a resin.

A ninth aspect of the present disclosure provides a method of manufacturing a collector, including: a step of forming a second layer by plating on a surface of a first layer that has a masked portion covered by a masking material; and a step of removing the masking material, wherein the first layer contains a light metal element, and the second layer contains a metal element whose oxidation-reduction potential based on Li is 2.3 V or more and that is other than an amphoteric element.

A tenth aspect of the present disclosure provides the method of manufacturing a collector of the ninth aspect, wherein the masking material is masking tape.

An eleventh aspect of the present disclosure provides a battery including a structure in which a first collector, a first electrode layer, an intermediate layer, a second electrode layer and a second collector are disposed in that order, wherein the first collector is the collector of any one of the first to eighth aspect, and is joined to the first electrode layer at the first region, and is joined to an electrode tab at the second region.

A twelfth aspect of the present disclosure provides the battery of the eleventh aspect, further including an electrolyte liquid, wherein the intermediate layer is a separator that is used in a battery that uses the electrolyte liquid.

A thirteenth aspect of the present disclosure provides the battery of the eleventh or twelfth aspect, wherein the intermediate layer contains a solid electrolyte.

A fourteenth aspect of the present disclosure provides the battery of any one of the eleventh to thirteenth aspect, wherein the first electrode layer contains an electrode active material, and oxidation-reduction potential based on Li of the electrode active material is 0.3 V or less.

A fifteenth aspect of the present disclosure provides the battery of the fourteenth aspect, wherein the electrode active material contains at least one selected from the group consisting of Si and C.

In accordance with an embodiment of the present disclosure, there can be provided a collector that highly reliably realizes suppression of alloying with lithium and good terminal connection. Further, in accordance with an embodiment of the present disclosure, there can be provided a method of manufacturing a collector that highly reliably realizes suppression of alloying with lithium and good terminal connection. Moreover, in accordance with an embodiment of the present disclosure, there can be provided a battery using a collector that highly reliably realizes suppression of alloying with lithium and good terminal connection.

### BRIEF DESCRIPTION OF THE DRAWINGS

Fig. 1 is a schematic plan view for explaining the joining of a tab and a collector of an embodiment of the present disclosure;
Fig. 2 is a schematic sectional view for explaining the structure of the collector of the embodiment of the present disclosure; and
Fig. 3 is a schematic sectional view in which a joined portion of the tab and the collectors of a battery of an embodiment of the present disclosure is cut along layering direction Z of an electrode layered structure.

### DETAILED DESCRIPTION

In the present disclosure, numerical value ranges expressed by using "-" mean ranges in which the numerical values listed before and after the "-" are included as the minimum value and maximum value, respectively.

In numerical value ranges that are expressed in a stepwise manner in the present disclosure, the maximum value or the minimum value listed in a given numerical value range may be substituted by the maximum value or the minimum value of another numerical value range that is expressed in a stepwise manner. Further, in the numerical value ranges put forth in the present disclosure, the maximum value or the minimum value of a given numerical value range may be substituted by a value set forth in the Examples.

In the present disclosure, "step" is not only an independent step and includes steps that, even in a case in which that step cannot be clearly distinguished from another step, achieve the intended object of that step.

In the present disclosure, combinations of two or more preferable aspects are more preferable aspects.

In the present disclosure, in a case in which there are plural types of materials that correspond to a component, the amount of that component means the total amount of the plural types of materials, unless otherwise specified.

In cases in which embodiments are described with reference to the drawings in the present disclosure, the structures of the embodiments are not limited to the structures illustrated in the drawings. Further, sizes of the members in the respective drawings are arbitrary, and the relative relationships between sizes of members are not limited to these.

### In the present disclosure, normal temperature means 25°C.

### <Collector>

A collector that is an embodiment of the present disclosure has a first region and a second region. The first region has a first layer and a second layer. The second region has the first layer, and either the second layer is not disposed thereat, or the thickness of the second layer is thinner than the thickness of the second layer in the first region. The first layer contains a light metal element. The second layer is disposed on the surface of the first layer, and contains a metal element whose oxidation-reduction potential based on Li is 2.3 V or more and that is other than an amphoteric element.

The present inventors studied ways to realize both suppression of alloying with lithium and terminal connection in a lightweight collector, and focused on the structures of a base material layer (i.e., the first layer) of the collector and a covering film (i.e., the second layer) that covers the base material layer. Then, the present inventors discovered that suppression of alloying with lithium and good terminal connection can be highly reliably realized by making the collector have a first region and a second region at which the structures of the first layer and the second layer are respectively different. Further, the present inventors found that, in accordance with a method of manufacturing a collector by using a masking material, it is possible to manufacture a collector having a first region and a second region at which the structures of the first layer and the second layer are respectively different.

As will be shown by the Examples that are described hereafter, at a collector in which the second layer has specific structures respectively in the first region and the second region, alloying with lithium is suppressed and connection of a terminal (e.g., a tab) is good, as compared with a collector in which the second layer does not have specific structures.

### (First Region and Second Region)

The first region and the second region mean portions of the collector, respectively. Specifically, the first region and the second region respectively indicate portions of the entire collector including in the thickness direction of the collector that is the electrode layering direction.

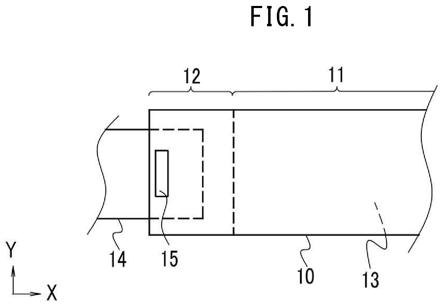

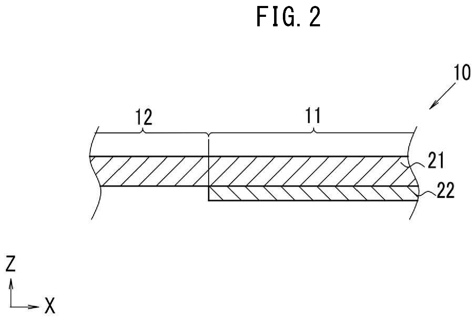

As illustrated in Fig. 1, a collector 10 that is an embodiment of the present disclosure has a first region 11 and a second region 12. The first region 11 and the second region 12 respectively indicate portions of the collector including in the thickness direction (i.e., direction Z in Fig. 2) of the collector that is orthogonal to plane XY. The first region 11 has a first layer and a second layer. At the second region 12, either the second layer is not disposed, or the thickness of the second layer is thinner than the thickness of the second layer in the first region 11. Accordingly, the second region 12 may have only the first layer. The first layer and the second layer are layered in the thickness direction of the collector. In Fig. 1, the first layer is disposed at the near side, in the drawing, in the direction (direction Z in Fig. 2) orthogonal to the drawing (plane XY), and the second layer is disposed at the far side, in the drawing, in the direction (direction Z in Fig. 2) orthogonal to the drawing (plane XY).

As illustrated in Fig. 2, the collector 10 that is an embodiment of the present disclosure has the first region 11 and the second region 12. Fig. 2 illustrates a case in which a cross-section of the collector 10 that is cut in the electrode layering direction is seen from plane XZ. The first region 11 has a first layer 21 and a second layer 22, and the second layer 22 is not disposed at the second region 12. In a case in which the second layer 22 is disposed at the second region 12, the thickness of the second layer 22 in the second region 12 is thinner than the thickness of the second layer 22 in the first region 11.

The first region 11 has a first joined portion 13 to which an electrode layer is joined. The second region 12 has a second joined portion 15 to which an electrode tab 14 that is a terminal is joined. At the collector 10, the first joined portion 13 and the second joined portion 15 respectively mean portions of the surface that is at the side at which the second layer is formed (refer to Fig. 1).

At the collector that is an embodiment of the present disclosure, at the first region 11 that has the first joined portion 13, alloying with lithium is suppressed effectively by the second layer, and, at the second region 12 that has the second joined portion 15 to which the electrode tab 14 is joined, either the second layer is not provided or the thickness of the second layer is thinner than the thickness of the second layer in the first region, and therefore, the electrode tab 14 can be joined well. By providing the first region 11 and the second region 12, which have respectively different structures at the second layer, at the single collector, both alloying with lithium and joining of a terminal can be highly reliably realized. Further, the collector that is an embodiment of the present disclosure can exhibit the above-described effects regardless of the type of the first layer or the type of the second layer of the collector.

### (First Layer)

The first layer contains a light metal element L. The first layer is the base material layer of the collector. The first layer can contain one type or two or more types of the light metal element L. The first layer is relatively lightweight because it contains the light metal element L. The proportion of the light metal element L contained in the first layer, with respect to all of the metal elements forming the first layer, may be 50 mass% or more, 60 mass% or more, or 70 mass% or more. For example, the proportion of the light metal element L contained in the first layer, with respect to all of the metal elements contained in the first layer, may be 100 mass% or less, 90 mass% or less, or 80 mass% or less.

The light metal elements L include metals whose specific gravity is 4.6 or less. Specific examples of the light metal element L are Al, Mg, Ti and Li. From the standpoint of lightening the weight of the collector, the first layer is preferably Al. An Al foil that contains Al is preferable as the first layer. The Al foil may be pure aluminum or may be an alloy. For example, in addition to 1000 series aluminum such as 1100 that is pure aluminum, an aluminum alloy to which other elements have been added as alloy elements may be used. Specifically, 3000 series such as 3003 and 3105 that are Al foils to which Mn has been added, and 5000 series such as 5052 and 5083 to which Mg has been added, may be used.

The thickness of the first layer is not particularly limited, and can be selected in consideration of the type and the scale of the battery obtained by using the collector. For example, the thickness of the first layer may be 5 µm or more, 10 µm or more, or 20 µm or more. For example, the thickness of the first layer may be 100 µm or less, 70 µm or less, or 50 µm or less. From the standpoints of lightening the weight of and improving the strength of the collector, the thickness is preferably 5 µm - 50 µm, and more preferably 3 µm - 20 µm.

### (Second Layer)

The second layer is disposed on a surface of the first layer, and contains a metal element M whose oxidation-reduction potential based on Li is 2.3 V or more (where the metal element M excludes amphoteric elements). The second layer is a covering layer disposed on a surface of the first layer, and contains a metal element that is other than an amphoteric element and whose oxidation-reduction potential based on Li is 2.3 V or more. Owing to the second layer, at the first joined portion 13 to which the electrode layer is joined, the electrical connection between the electrode layer and the collector is good, and alloying of the first layer and lithium is suppressed well.

The material of the second layer is not particularly limited provided that it is a material containing the metal element M whose oxidation-reduction potential based on Li is 2.3 V or more and that is other than an amphoteric element, and can be selected in consideration of the desired characteristics of the collector (e.g., conductivity, strength).

Specific examples of the metal element M contained in the second layer are Ni (2.8 V), Cr (2.3 V), Fe (2.6 V) and Co (2.8 V). The value in parentheses indicates the oxidation-reduction potential, based on lithium, of the corresponding metal element M. Ni, Cr and Fe are preferable as the metal element M, and Ni is more preferable. The metal element M contained in the second layer may be only one type or may be two or more types.

The second layer may contain only the metal element M as the metal element, or may contain the metal element M and a metal element that is other than the metal element M (i.e., an amphoteric element, or a metal element that is other than an amphoteric element and whose oxidation-reduction potential based on Li is less than 2.3 V). The second layer contains, as the main component thereof, the metal element M whose oxidation-reduction potential based on Li is 2.3 V or more. Main component here means a component that is 50 mass% or more of the mass of all of the metal elements contained in the second layer. Accordingly, the second layer does not contain an amphoteric element as the main component. From the standpoint of highly reliably realizing the suppression of alloying of Al and the like contained in the first layer with lithium, the proportion of the metal element M that is contained in the second layer is preferably 70 mass% or more, and more preferably 80 mass% or more, and even more preferably 90 mass% or more, with respect to all of the metal elements.

The thickness of the second layer is not particularly limited in the first region, and can be selected in consideration of the type and the scale of the battery obtained by using the collector. From the standpoint of highly reliably realizing the suppression of alloying of Al and the like contained in the first layer with lithium, for example, the thickness of the second layer in the first region is preferably 0.5 µm or more, and is more preferably 1.0 µm or more. The thicker the thickness of the second layer in the first region, the stronger the tendency for the effect of suppressing reaction of Al with lithium to improve, but, on the other hand, the greater the manufacturing cost of the battery. From the standpoint of highly reliably realizing the suppression of alloying of Al and the like contained in the first layer with lithium, in the first region, a third layer may be placed on the second layer. The third layer is described later.

In the second region, either the second layer is not provided, or the thickness of the second layer is thinner than the thickness of the second layer in the first region. From the standpoint of highly reliably realizing good terminal connection, it is preferable that the second layer not be disposed in the second region. If the second layer is disposed in the second region, from the standpoint of highly reliably realizing good terminal connection, the thickness thereof is thinner than the thickness of the second layer in the first region, and it is more preferable that it be 50% or less of the thickness of the second layer in the first region, and more preferably 20% or less.

If the second layer is disposed in the second region, from the standpoint of highly reliably realizing good terminal connection, the thickness of the second layer in the second region is preferably 0.5 µm or less, and is more preferably 0.2 µm or less.

### (Third Layer)

From the standpoint of highly reliably realizing suppression of alloying of Al and the like contained in the first layer with lithium, the first region has a third layer disposed on the surface of the second layer, and the third layer preferably contains a resin. The material of the third layer is not particularly limited provided that it contains a resin, and can be selected in consideration of the desired characteristics of the collector (e.g., conductivity, strength).

From the standpoint of suppressing an increase in battery resistance, it is preferable that the third layer exhibit conductivity. The material of the third layer that is conductive is not particularly limited, and examples are a combination of a resin and a conductive substance, and a resin that is conductive. Examples of the resin contained in the third layer are polyvinyl chloride, polyvinyl acetate, polyvinylidene chloride, polyvinyl alcohol, polyvinylidene fluoride, polyethylene, polypropylene, ethylene-vinyl acetate copolymer, polystyrene, polyurethane, polyamide, polyester, polytetrafluoroethylene, ABS resin, AS resin, acrylic resin, and conductive resins. Examples of conductive resins are polyaniline, polypyrrole, polythiophene, polyacetylene, polyparaphenylene, polyphenylene vinylene, polyacrylonitrile, and polyoxydiazole. From the standpoint of the adhesive force of the collector with the electrode layer, the third layer preferably contains a thermoplastic resin, and more preferably contains a vinyl resin. Vinyl resin in the present disclosure means a resin obtained by polymerizing a monomer having a vinyl group.

Examples of conductive substances are carbon materials, metals, conductive oxides, and conductive nitrides. Specific examples of carbon materials are graphite, carbon black (acetylene black, thermal black, furnace black), carbon nanotubes (CNT), carbon nanofibers (CNF), and vapor grown carbon fibers (VGCF). From the standpoint of increasing the adhesive force of the collector with the electrode layer, the third layer preferably contains a carbon material.

The thickness of the third layer is not particularly limited, and can be selected in consideration of the type and the scale of the battery obtained by using the collector. For example, the thickness of the third layer may be 0.1 µm or more, 0.5 µm or more, or 1 µm or more. For example, the thickness of the third layer may be 10 µm or less, 5 µm or less, or 3 µm or less.

The total thickness of the collector that is an embodiment of the present disclosure may be, in the first region, 5 µm or more, 10 µm or more, or 20 µm or more for example. The total thickness of the collector of the present disclosure may be, for example, 120 µm or less, 80 µm or less, or 60 µm or less.

From the standpoint of increasing the adhesive force of the collector with the electrode layer, it is preferable that the third layer be able to deform in accordance with the shape of the electrode active material at the boundary surface with the electrode layer. If the third layer is deformable in accordance with the shape of the electrode active material, the anchoring effect that is due to the electrode active material that has entered into the third layer is exhibited, and peeling of the electrode layer from the collector is suppressed more effectively.

### (Layer Structure of Collector)

The collector that is the embodiment of the present disclosure may have the second layer on a single surface of the first layer, or may have the second layer on both surfaces of the first layer. One surface of the collector that is an embodiment of the present disclosure may function as a positive electrode collector, and the other surface may function as a negative electrode collector. Such a collector is used as the collector of a battery having a bipolar structure for example.

An electrode layer may be disposed on one surface or both surfaces of the collector of the present disclosure. If electrode layers are disposed on both surfaces of the collector, the electrodes disposed on both surfaces of the collector may be either positive electrodes or may be negative electrodes. Or, of electrode layers that are disposed on both surfaces of the collector, one may be a positive electrode and the other may be a negative electrode. A structure in which the electrode layers disposed on both surfaces of the collector are positive electrodes or are negative electrodes is applied to a battery having a monopolar structure for example. A structure in which one of the electrode layers disposed on both surfaces of the collector is a positive electrode and the other is a negative electrode is applied to a battery having a bipolar structure for example.

It is preferable that the electrode layers disposed on one surface or both surfaces of the collector be in a state of contacting the surface of the collector on which the second layer is disposed. The electrode layer that contacts the surface of the collector on which the second layer is disposed may be a positive electrode layer or a negative electrode layer, but is preferably a negative electrode layer from the standpoint that the effects of the second layer, such as suppression of lithium alloying, are more marked.

### <Method of Manufacturing Collector>

A method of manufacturing a collector of the present embodiment includes a step (hereinafter also called second layer forming step) of forming a second layer by plating on a surface of a first layer that has a masked portion covered by a masking material, and a step (hereinafter also called masking material removing step) of removing the masking material. The first layer contains a light metal element. The second layer contains the above-described metal element that is other than an amphoteric element and whose oxidation-reduction potential based on Li is 2.3 V or more.

Due to the collector manufacturing method that includes the second layer forming step and the masking material removing step, a collector that has a first region having a first layer and a second layer, and a second region that has the first layer and at which either the second layer is not disposed or the thickness of the second layer is thinner than the thickness of the second layer in the first region, can be more reliably manufactured. Accordingly, a collector that highly reliably realizes suppression of alloying with lithium and good terminal connection can be manufactured. Further, the formation of the second layer in the first region, and the formation of the second layer in the second region in a case in which the second region has the second layer, can be carried out without damaging the first layer, and therefore, the collector can be manufactured at a high yield. In the manufactured collector, the second region is the region that includes a masked portion where the surface of the first layer was covered by a masking material, and the first region is the region including the portion other than the masked portion.

### (Second Layer Forming Step)

The second layer forming step is a step of forming the second layer by plating on the surface of the first layer that has a masked portion covered by a masking material. The masked portion is formed by covering the portion, which is to become the second region, of the surface of the first layer by a masking material. The surface of the first layer has a masked portion included in the second region, and a non-masked portion included in the first region.

In the second region, the masking material is not particularly limited, provided that, when the first layer is plated using the masked portion included in the second region of the surface of the first layer as a mask, either the second layer is not formed, or the second layer that is thinner than that of the first region is formed.

The masking material is preferably a masking tape in order for the second layer to not be formed, or the second layer that is thinner than that of the first region to be formed, by plating in the second region that is the masked portion. In a case of covering the first layer, the masking tape is preferably a tape that is such that the formation of the second layer by plating is suppressed, and is more preferably a tape that is such that the second layer is not formed.

It is preferable that the masking tape have chemical resistance that is such that it does not deteriorate when exposed to the plating liquid, heat resistance that is such that it can withstand temperature changes in the plating process, adherence that is such that leaking of the plating liquid does not occur, and ease of peeling that is such that, when peeled, it can be peeled off without damaging the first layer and without leaving a trace. Moreover, it is more preferable that the masking tape be such that, at the second region that is the masked region, either the second layer is not formed or the second layer that is thinner than that in the first region is formed by the plating. Specifically, a polyimide tape having a fluororesin coating, or the like, can be used as the masking tape, and it is preferable that the masking tape be a masking tape for plating. A commercially available masking tape for plating may be used.

The plating method, which is used at the time of forming the second layer by plating on the surface of the first layer that has the masked portion covered by the masking material, can be carried out without limitations provided that the second layer can be formed thereby. By forming the second layer by plating, the control of the thickness of the second layer, the ensuring of the adherence of the second layer with respect to the first layer, and the mass producibility are excellent. The plating may be electroless plating or electroplating.

As an example, the following processings can be carried out in a case of employing electroplating. Namely, if the first layer is Al foil, of the surface of the Al foil, the portion that is to become the second joined region that includes the second region is covered by a masking material. Thereafter, degreasing processing, etching processing, a zincate treatment, readying of the plating tank in which electrodes for plating and a prepared plating liquid are placed, electroplating processing that forms the second layer by immersing the first layer in the plating tank and applying voltage, a washing processing of washing the work on which the second layer has been formed, and the like are carried out successively. Each of these processings may be carried out a single time or may be carried out plural times. Further, after the last of these respective processings, rinsing may be carried out so as to remove the adhered processing components.

The electroplating conditions are not set unconditionally because they vary in accordance with the type of the plating liquid that is used and the like. For example, the plating liquid concentration is 0.2 mass% - 80 mass%, the liquid temperature is 5 - 70°C, the current density is 0.5 A/dm² - 60.0 A/dm² and is preferably 2.0 A/dm² - 14.0 A/dm², the voltage is 1 V - 100 V, and the processing time is 1 second - 20 minutes. These conditions can be adjusted so as to obtain the desired plating amount, film thickness of the second layer at the first region, covering rate of the second layer, and the like.

### (Masking Material Removing Step)

The masking material removing step, which is a masking material removing step carried out after the second layer forming step, is a step of removing the masking material from the work after the plating. If the masking material is masking tape, it suffices to peel the masking tape off of the work.

In the first region, i.e., the non-masked region, a processing that forms a bumpy structure at the surface of the second layer in the first region may be carried out as needed. By forming a bumpy structure at the surface of the second layer, for example, the adhesive force of the collector with respect to the electrode layer can be improved.

Further, in the non-masked region, the second layer may cover the surface of the first layer completely, or may cover the surface of the first layer partially. From the standpoint of highly reliably realizing suppression of alloying with lithium, the covering rate of the surface of the first layer by the second layer is preferably 50% or more, 70% or more, 80% or more, or 100%. This covering rate is the percent of the value obtained by dividing the surface area of the second layer on the collector by the surface area of the first layer.

Details of the first layer and the second layer in the method of manufacturing a collector are the same as those described above. Accordingly, in the second layer forming step, it is preferable that the first layer contain element Al. Further, the thicknesses of the first layer and the second layer in the first region and the second region respectively are the same as those described above.

The battery to which the collector that is an embodiment of the present disclosure is applied may use a liquid electrolyte (electrolyte liquid) as the electrolyte, or may use a solid electrolyte as the electrolyte, or may use only a solid electrolyte as the electrolyte.

In the present disclosure, there are cases in which a battery using a solid electrolyte as at least some of the electrolyte thereof is called a "solid-state battery". The solid-state battery may be a semi-solid-state battery having a gel layer, which contains an electrolyte liquid and a polymer, between an electrode and a solid electrolyte, or may be an all-solid-state battery that uses a solid electrolyte as the electrolyte. The solid electrolyte may include an electrolyte liquid in an amount of less than 10 mass% with respect to the entire amount of the electrolytes. The solid-state battery is preferably an all-solid-state battery. There are cases in which a battery using only a solid electrolyte as the electrolyte is called an "all-solid-state battery".

### <Battery>

A battery that is an embodiment of the present disclosure (hereinafter also called battery) includes a structure (hereinafter called electrode layered structure) in which a first collector, a first electrode layer, an intermediate layer, a second electrode layer and a second collector are disposed in that order. The first collector is a collector (hereinafter also called specific collector) having a first region that has a first layer and a second layer, and a second region that has the first layer and at which either the second layer is not disposed or the thickness of the second layer is thinner than the thickness of the second layer in the first region, and the first layer contains a light metal element, and the second layer is disposed on the surface of the first layer, and contains a metal element whose oxidation-reduction potential based on Li is 2.3 V or more and that is other than an amphoteric element. The first collector is joined to the first electrode layer in the first region, and is joined to an electrode tab in the second region.

In the present disclosure, there are cases in which the first collector and the second collector are called the "collectors" without distinguishing therebetween, and there are cases in which the first electrode layer and the second electrode layer are called the "electrode layers" without distinguishing therebetween.

In the battery, when the first collector is a negative electrode collector, the second collector is a positive electrode collector. When the first collector is a positive electrode collector, the second collector is a negative electrode collector. In the battery, when the first electrode layer is a negative electrode layer, the second electrode layer is a positive electrode layer. When the first electrode layer is a positive electrode layer, the second electrode layer is a negative electrode layer.

In the battery, the first collector may be used as a negative electrode collector or may be used as a positive electrode collector. If the first collector is the specific collector, it is preferable that the first collector be used as the negative electrode collector, from the standpoint that effects of the second layer, such as suppression of lithium alloying, that the specific collector has are more marked.

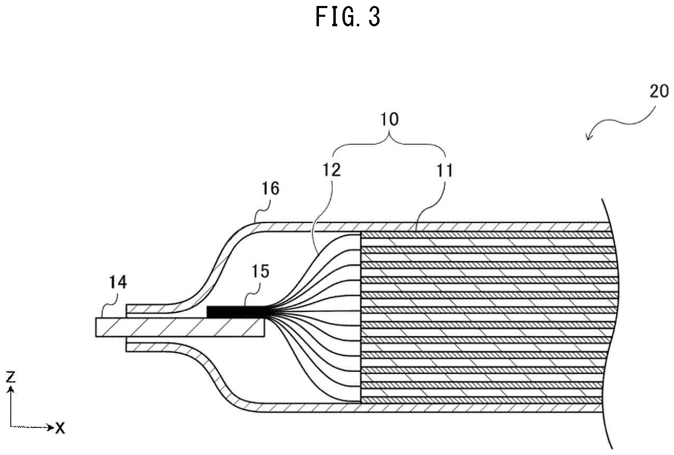

As illustrated in Fig. 3, a battery 20 that is an embodiment of the present disclosure has a first collector, which has the first region 11, the second region 12 and the second joined portion 15, and a first electrode layer, an intermediate layer, a second electrode layer, a second collector, the electrode tab 14 and an exterior body 16, and has a bipolar structure. In order to avoid complicating the drawings, the first electrode layer, the intermediate layer, the second electrode layer and the second collector, respectively, are not illustrated. The plural first collectors and the electrode tab 14 are joined at the second joined portion 15 that the second region 12 has.

### (Collector)

The types of collectors that structure the electrode layered structure are not particularly limited provided that at least the first collector is the above-described specific collector. Details and preferable forms of the specific collector are the same as the details and preferable forms of the above-described collector that is an embodiment of the present disclosure.

The first collector is joined to the first electrode layer at the first region, and is joined to the electrode tab at the second region. It suffices for the method of joining the first collector and the electrode tab to be a method that joins these, and the method is preferably ultrasonic joining. The first collector 10 and the electrode tab 14 are joined by ultrasonic joining at the position of the second joined portion 15 (refer to Fig. 1).

### (Electrode Layer)

In the battery, the first electrode layer may be a negative electrode layer or may be a positive electrode layer. The first electrode layer is preferably a negative electrode layer from the standpoint that, if the first electrode layer is a negative electrode layer, effects such as the alloying with lithium in the second layer of the specific collector are more marked.

The types of the electrode layers that structure the electrode layered structure are not particularly limited and can be selected from well-known electrode layers. The electrode layer contains at least an electrode active material, and, as needed, may contain a binder, a conductive material, a solid electrolyte or the like. From the standpoint of the battery performances, it is preferable that the electrode active material have an oxidation-reduction potential based on Li of 0.3 V or less. If the intermediate layer contains a solid electrolyte, at least one of the first electrode layer and the second electrode layer that are disposed at the both sides of the intermediate layer may contain a solid electrolyte.

In the present embodiment, the electrode active material contained in the first electrode layer is also called the first electrode active material, and the electrode active material contained in the second electrode layer is also called the second electrode active material. If the first electrode layer is a negative electrode layer, the first electrode active material is a negative electrode active material. If the first electrode layer is a positive electrode layer, the first electrode active material is a positive electrode active material. If the second electrode layer is a negative electrode layer, the second electrode active material is a negative electrode active material. If the second electrode layer is a positive electrode layer, the second electrode active material is a positive electrode active material.

Specific examples of negative electrode active materials are carbon materials, active materials containing Si, metallic lithium, lithium-containing alloys, metals or alloys that can form alloys with lithium, oxides, and transition metal nitrides. From the standpoint of battery performances, it is preferable that the electrode active material contain at least one type selected from the group consisting of element Si and element C.

Examples of carbon materials are graphite materials, amorphous carbon materials, carbon black, and activated carbon. Examples of graphite materials are natural graphite and artificial graphite. Examples of amorphous carbon materials are hard carbon, soft carbon, coke, mesocarbon microbeads (MCMB), and mesophase pitch carbon fibers (MCF). The graphite materials may be covered by a metal or amorphous carbon.

Examples of active materials containing the element Si are elemental silicon, silicon alloys (e.g., alloys of Si and one or more metals selected from the group consisting of Sn, Ti, Fe, Ni, Cu, Co and Al), porous silicon, silicon clathrate compounds, and silicon oxides.

Specific examples of positive electrode active materials are composite oxides containing lithium and a transition metal (hereinafter also called composite oxides).

Examples of composite oxides are composite oxides having a layered-type crystal structure, composite oxides having a spinel-type crystal structure, and composite oxides having an olivine-type crystal structure.

Specific examples of composite oxides having a layered-type crystal structure are compounds expressed by LiMO₂ (where M is at least one type of transition metal selected from the group consisting of Ni, Co and Mn), and compounds formed by adding a different type of element to such compounds. Representative examples of composite oxides having a layered-type crystal structure are LCO (lithium cobalt oxide), NCM (lithium nickel cobalt manganese oxide), and NCA (lithium nickel oxide or lithium nickel cobalt aluminum oxide).

Specific examples of composite oxides having a spinel-type crystal structure are LiMn₂O₄.

Specific examples of composite oxides having an olivine-type crystal structure are LiMPO₄ (M is Fe, Co, Ni or Mn).

The electrode active material contained in the electrode layer may be a single type only, or may be a combination of two or more types.

The form of the electrode active material may be, for example, fiber-shaped, spherical or flake-shaped.

The volume average particle diameter of the electrode active material may be selected from the range of 5 µm - 50 µm for example. The volume average particle diameter of the electrode active material is the value (D50) at which the accumulation from the small diameter side is 50% in a volume-based particle size distribution obtained by using a laser diffraction/scattering method.

Specific examples of the binder are polyvinylidene fluoride (PVdF), polyethylene, polypropylene, polyethylene terephthalate, cellulose, nitrocellulose, carboxy methylcellulose, polyethylene oxide, polyepichlorohydrin, polyacrylonitrile, styrene-butadiene rubber (SBR), acrylonitrile-butadiene rubber (NBR), polyacrylate, polymethacrylate, and polytetrafluoroethylene (PTFE).

Examples of the conductive material are carbon materials, metals, electrically-conductive oxides, and electrically-conductive nitrides.

Specific examples of carbon materials are graphite, carbon black (acetylene black, thermal black, furnace black), carbon nanotubes (CNT), carbon nanofibers (CNF), and vapor grown carbon fibers (VGCF^{™}).

The conductive material may be a single type only, or two or more types may be used together.

Examples of the solid electrolyte are sulfide solid electrolytes, oxide solid electrolytes and polymer solid electrolytes.

From the standpoint of the battery performances, sulfide solid electrolytes and polymer solid electrolytes are preferable as the solid electrolyte, and from the standpoint of thermal stability, sulfide solid electrolytes are more preferable.

The solid electrolyte may be a single type only, or two or more types may be used together.

Examples of sulfide solid electrolytes are compounds containing sulfur (S) and a metal element that provides conducting ions.

Examples of the metal element are Li, Na, K, Mg and Ca. Thereamong, Li is preferable as the metal element.

The sulfide solid electrolyte may contain Li and S, and at least one selected from the group consisting of P, Si, Ge, Al and B. Thereamong, a sulfide solid electrolyte that contains Li, S and P (hereinafter also called LPS-type sulfide solid electrolyte) is preferable.

From the standpoint of ionic conductivity, the sulfide solid electrolyte may contain a halogen element such as Cl, Br, I. From the standpoint of chemical stability, the sulfide solid electrolyte may contain oxygen (O).

Specific examples of LPS-type sulfide solid electrolytes are Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, LiI-Li₂S-P₂O₅, LiI-Li₃PO₄-P₂S₅, LiBr-LiI-Li₂S-P₂S₅, Li₂S-P₂S₅-ZₘSₙ (m and n in the formula are respectively positive numbers, and Z is Ge, Zn or Ga), Li₂S-GeS₂, Li₂S-SiS₂-Li₃PO₄, and Li₂S-SiS₂-LiₓMO_{y} (x and y in the formula are respectively positive numbers, and M is P, Si, Ge, B, Al, Ga or In).

In the above description, the notation "Li₂S-P₂S₅" means a sulfide solid electrolyte obtained by using Li₂S and P₂S₅ as the raw materials. The same holds for the other notations.

Among LPS-type sulfide solid electrolytes, sulfide solid electrolytes obtained by using Li₂S and P₂S₅ are preferable, and sulfide solid electrolytes satisfying the following formula are more preferable.

Li_{3+x+5y}P_{1-y}S₄ (0<x≤0.6, 0<y≤0.2)

Examples of oxide solid electrolytes are compounds having a NASICON (Na₃Zr₂PSi₂O₁₂) type crystal structure. Compounds having a NASICON-type crystal structure have high ionic conductivity, and excellent stability in the atmosphere.

Examples of compounds having NASICON-type crystal structures are phosphates that contain lithium. Examples of phosphates are composite lithium phosphate salts with Ti (e.g., Li₁₊ₓAlₓTi₂₋ₓ(PO₄)₃), and compounds in which all of or some of the Ti in the aforementioned composite lithium phosphate salt is substituted with a tetravalent transition metal such as Ge, Sn, Hf, Zr or a trivalent transition metal such as Al, Ga, In, Y, La.

Specific examples of compounds having a NASICON-type crystal structure are Li-Al-Ge-P-O based materials (Li₁₊ₓAlₓGe₂₋ₓ(PO₄)₃), Li-Al-Zr-P-O based materials (Li₁₊ₓAlₓZr₂₋ₓ(PO₄)₃), and Li-Al-Ti-P-O based materials (Li₁₊ₓAlₓTi₂₋ₓ(PO₄)₃).

Examples of polymer solid electrolytes are mixtures (complexes) of polymer compounds and electrolyte salts. Specific examples of polymer compounds are polyether-based polymer compounds such as polyethylene oxide (PEO) and polypropylene oxide (PPO), polyamine-based polymer compounds such as polyethyleneimine (PEI), and polysulfide-based polymer compounds such as polyalkylene sulfide (PAS). Thereamong, polyether-based polymer compounds are preferable.

### (Intermediate Layer)

Examples of the intermediate layer that is used in the battery are a separator that is used in batteries using an electrolyte liquid, and an intermediate layer that is used in all-solid-state batteries. If an electrolyte liquid is used, the battery that is an embodiment of the present disclosure further contains an electrolyte liquid, and the intermediate layer is preferably a separator used in batteries that use an electrolyte liquid. The thickness of the intermediate layer is not particularly limited, and can be selected from the range of 1 µm - 30 µm for example.

If the intermediate layer is a separator, the type of separator is not particularly limited and can be selected from among well-known separators. Specific examples of separators are porous sheets formed from a resin such as polyethylene, polypropylene, polymethylpentene, polyester, cellulose and polyamide.

If the intermediate layer contains a solid electrolyte, the type of the solid electrolyte contained in the intermediate layer is not particularly limited. For example, the solid electrolyte may be selected from among the above-described solid electrolytes that may be contained in the electrode layer. If the intermediate layer contains a solid electrolyte, the first electrode layer and the second electrode layer may respectively contain a solid electrolyte. In this case, the types of the solid electrolytes contained in the respective layers may be the same or may be different.

If the battery contains a solid electrolyte, the battery may contain, together with the solid electrolyte, an electrolyte liquid in an amount of less than 10 mass% with respect to the total amount of the electrolytes. If the battery contains a solid electrolyte, the solid electrolyte may be a composite solid electrolyte containing an inorganic solid electrolyte and a polymer electrolyte.

If the battery contains an electrolyte liquid as the electrolyte, the type of the electrolyte liquid is not particularly limited, and a well-known electrolyte liquid can be used. Specific examples of the electrolyte liquid are liquids in which a lithium salt such as LiPF₆ or LiFSI is dissolved in an organic solvent. Specific examples of the organic solvent are cyclic or chain carbonates such as ethylene carbonate (EC), dimethyl carbonate (DMC), diethyl carbonate (DEC), and ethyl methyl carbonate (EMC). The solvent may be a mixture of two or more types of solvents, and may be a mixture containing a cyclic carbonate and a chain carbonate. The solvent may contain additives such as vinylene carbonate (VC).

In the battery, from the standpoint of highly reliably realizing suppression of alloying with lithium and good terminal connection using the specific collector, the intermediate layer preferably contains a solid electrolyte, and the battery is preferably a solid-state battery.

### (Exterior Body)

The battery may further have an exterior body. The exterior body accommodates at least the above-described electrode layered body. Examples of the exterior body are a laminate-type exterior body and a case-type exterior body. A laminate-type exterior body may be formed from a laminated body (i.e., a laminate film) that has a metal layer containing a metal such as aluminum and a heat sealing layer containing a resin that melts by being heated.

### (Restraining Member)

The battery may further have a restraining member. The restraining member applies restraining pressure in the thickness direction to the above-described electrode layered body.

The restraining pressure that is applied in the thickness direction of the electrode layered body may be, for example, 0.1 MPa or more, 1 MPa or more, or 5 MPa or more.

The restraining pressure that is applied in the thickness direction of the electrode layered body may be, for example, 100 MPa or less, 50 MPa or less, or 20 MPa or less.

### <Applications of Battery>

Applications of the battery are not particularly limited. Examples of representative applications are use as the power source of a vehicle, an electronic device or a power storage system. Thereamong, the battery of the present disclosure is preferably used as the power source of a vehicle, and is preferably used as the power source for driving of a hybrid electric vehicle, a plug-in hybrid electric vehicle, or an electric vehicle.

Examples of vehicles are electric four-wheel vehicles, electric two-wheel vehicles, gasoline-powered vehicles and diesel-powered vehicles. Examples of electric four-wheel vehicles are electric vehicles (BEVs), plug-in hybrid electric vehicles (PHEVs), and hybrid electric vehicles (HEVs). Examples of electric two-wheel vehicles are electric motorcycles and electric assist bicycles.

### EXAMPLES

Embodiments of the present disclosure are described hereinafter with reference to Examples. However, the present disclosure is not limited to these Examples.

### <Example 1>

### (Base Material Layer (First Layer))

A 1N30-H material of a thickness of 15 µm was used as the base material layer (i.e., the first layer). 1N30-H material is a material based on JIS H 4000. 1N30-H material is an alloy of pure aluminum, and has an aluminum purity of 99.3% or more, and is an aluminum foil that has been finished so as to be hard by hot rolling.

### (Electroplating)

Masking tape for plating was affixed to an end portion of each of the both surfaces of this base material layer. The masking tape was affixed to one end portion of the base material layer. Ni was deposited by electroplating onto the base material layer at which the masking tape for plating was affixed to a portion thereof. The electroplating was carried out by subjecting the Al foil of the base material layer to following steps 1 through 7 in that order.
1. Sodium carbonate, sodium metasilicate, sodium tripolyphosphate and a surfactant were placed in a vessel, and the pH was adjusted to around 10. The Al foil was immersed in the solution that was at 50°C, and thereafter was washed with water.
2. The base material layer that had undergone step 1. was immersed in a sodium hydroxide solution of a pH of around 14, and thereafter was washed with water.
3. The base material layer that had undergone step 2. was immersed in a nitric acid solution, and thereafter was washed with water.
4. The base material layer that had undergone step 3. was immersed in a solution in which zinc oxide had been dissolved in a sodium hydroxide solution, and thereafter was washed with water.
5. The base material layer that had undergone step 4. was immersed in a nitric acid solution, and thereafter was washed with water.
6. The base material layer that had undergone step 5. was immersed in a solution in which zinc oxide had been dissolved in a sodium hydroxide solution, and thereafter was washed with water.
7. Boric acid, nickel sulfate, and nickel chloride were dissolved in water, and the solution was adjusted to a pH of around 4.0 - 4.5 and a temperature of 50°C. Holes were formed in the Al film of the base material layer that had undergone step 6., and copper wires were wound on hole portions, and the base material layer was immersed in the vessel. Thereafter, current was made to flow at 5 A/dm² from the copper wires, and electroplating was carried out such that a covering layer (i.e., the second layer) of 2 µm that contained nickel was formed on the surface of the masking tape for plating and on the surface of the base material layer where the masking tape for plating had not been affixed.

The covering layer containing nickel was formed by the electroplating on the surface of the masking tape for plating and on both the surfaces of the base material layer, respectively. Thereafter, the masking tape for plating was peeled-off, and a collector was obtained. This collector was collector 1.

The total thickness of collector 1 was 16 µm. The film thickness of the covering layer of the second joined portion that was the portion that had been masked (i.e., the plating thickness, which is listed as "plating thickness of portion joined with tab" in Table 1), and the film thickness of the covering layer of the first joined portion that was the portion that had not been masked (i.e., the plating thickness, which is listed as "plating thickness of portion joined with electrode layer" in Table 1), were respectively measured. In Example 1, when the plating thickness of the covering layer of the second joined portion was measured, it could not be measured, and the covering film was substantially not formed thereat. The measured covering layer film thicknesses of the first joined portion and the second joined portion are listed in Table 1.

Note that, in the Examples and the Comparative Examples, the thickness of the collector and film thickness of the covering layer are values measured by using an image obtained by an SEM (a scanning electron microscope) after the surface, which was obtained by cutting the obtained collector along the layering direction, was subjected to cross-sectional processing by a cross section polisher.

### <Example 2 through Example 5>

Collectors (Collector 2 through Collector 5) were respectively obtained in the same way as in Example 1, other than the fact that the plating conditions were made to differ. The total thickness of each of Collector 2 through Collector 5 was 16 µm. The measured plating thicknesses of the first joined portion and the second joined portion respectively are listed in Table 1.

### <Comparative Example 1 and Comparative Example 2>

Collectors (Collector 6 and Collector 7) were respectively obtained in the same way as in Example 1, other than the fact that the plating conditions were made to differ. The total thickness of each of Collector 6 and Collector 7 was 16 µm. The measured plating thicknesses of the first joined portion and the second joined portion are listed in Table 1.

### <Comparative Example 3>

Masking tape for plating was affixed to an end portion of each of the both surfaces of the base material layer. The masking tape was affixed to the portion of the base material layer that was to become the first region, and masking tape was not affixed to the portion that was to become the second region. Namely, masking tape was not affixed to the places where masking tape was affixed in Example 1, and masking tape was affixed to places where masking tape was not affixed in Example 1. Ni was deposited by electroplating onto the base material layer at which the masking tape for plating was affixed to a portion thereof. The electroplating was carried out in the same way as in Example 1, and Collector 8 was obtained. The total thickness of Collector 8 was 16 µm. The film thickness of the covering layer of the first joined portion that was the portion that had been masked, and the film thickness of the covering layer of the second joined portion that was the portion that had not been masked, were respectively measured. In Comparative Example 3, when the film thickness of the covering film at the first joined portion was measured, it could not be measured, and the covering film was substantially not formed. The measured covering layer film thicknesses formed by plating of the first joined portion and the second joined portion are listed in Table 1.

### <Evaluation>

### (Evaluation of Tab Joining)

Ultrasonic joining with an electrode tab was carried out by respectively using Collector 1 through Collector 8, which were obtained in Example 1 through Example 5 and Comparative Example 1 through Comparative Example 3. The electrode tab was a substrate containing aluminum, and the thickness thereof was 2 mm - 3 mm. The electrode tabs and the obtained collectors were joined by ultrasonic joining.

The respective, obtained collectors, including the joined portions of the collectors and the electrode tabs, were punched-out in dumbbell shapes by using a Thomson blade formed in the shape of the #6 dumbbell described in JIS K6251, and the punched-out pieces were used as test pieces. The electrode tab and the collector of the obtained sample piece was grasped by a tensile tester, and a tensile test was carried out at a speed of 2 mm/min. Thereafter, the joined portions of the broken test pieces were observed visually, and the absence/presence of peeling of the joined portion was evaluated. The evaluation standards were as follows. The results of evaluation are given in Table 1.

### (Evaluation Standards)

A: No peeling was recognized at the joined portion.
B: Slight peeling was recognized at the joined portion.
C: Extensive peeling was recognized at the joined portion.

### (Evaluation of Suppression of Li Alloying)

Test cells using a solid electrolyte were constructed. Specifically, the collector that was the subject of evaluation was used as the working electrode, lithium metal foils were used as the counter electrode and the reference electrode, a sulfide solid electrolyte layer was placed between these, and a layered half-cell was fabricated. By using the cell, potential sweeping was carried out repeatedly at a constant sweeping speed (5 mV/s) by using cyclic voltammetry (CV) in a predetermined potential range (e.g., 2.3 V - 0.0 V vs. Li/Li⁺). Thereafter, the collector after the testing was removed from the cell, and the absence/presence of changing of the color of the Al foil surface of the collector was observed visually, and absence/presence of reaction with Li (Li alloying) was evaluated. The evaluation standards were as follows. The results of evaluation are given in Table 1.

### (Evaluation Standards)

A: No changing of the color was recognized at the Al foil surface of the collector.
B: Changing of the color was recognized at the Al foil surface of the collector.

**[Table 1]**

| | plating thickness (µm) of portion joined with tab | plating thickness (µm) of portion joined with electrode layer | evaluation of tab joining | evaluation of suppression of Li alloying |
|---|---|---|---|---|
| Comp.Ex.1 (Collector 6) | 0.5 | 0.5 | C | A |
| Comp.Ex.2 (Collector 7) | 1 | 0.5 | C | A |
| Comp.Ex.3 (Collector 8) | 0.5 | 0 | C | B |
| Ex.1 (Collector 1) | 0 | 0.5 | A | A |
| Ex.2 (Collector 2) | 0.2 | 0.5 | A | A |
| Ex.3 (Collector 3) | 0.4 | 0.5 | B | A |
| Ex.4 (Collector 4) | 0.2 | 1 | A | A |
| Ex.5 (Collector 5) | 0 | 1 | A | A |

As shown in Table 1, it was demonstrated that the collectors in accordance with the Examples are collectors in which, at the portion joined with the tab and the portion joined with the electrode layer, the plating thicknesses are respectively adjusted, and suppression of alloying with lithium and good terminal connection are realized with high reliability.

## Claims

1. A collector comprising:
a first region having a first layer and a second layer; and
a second region including a portion of the first layer, and at which either the second layer is not disposed or a thickness of the second layer is thinner than a thickness of the second layer in the first region,
wherein:
the first layer contains a light metal element, and
the second layer is disposed on a surface of the first layer, and contains a metal element whose oxidation-reduction potential based on Li is 2.3 V or more and that is other than an amphoteric element.

2. The collector of claim 1, wherein:
the first region has a first joined portion to which an electrode layer is joined, and
the second region has a second joined portion to which an electrode tab is joined.

3. The collector of claim 1, wherein the thickness of the second layer in the first region is 0.5 µm or more.

4. The collector of claim 1, wherein, in a case in which the second layer is disposed at the second region, a thickness of the second layer in the second region is 50% or less of the thickness of the second layer in the first region.

5. The collector of claim 1, wherein, in a case in which the second layer is disposed at the second region, a thickness of the second layer in the second region is 0.5 µm or less.

6. The collector of claim 1, wherein the light metal element is Al.

7. The collector of claim 1, wherein the metal element includes at least one selected from the group consisting of Ni, Cr and Fe.

8. The collector of claim 1, wherein:
the first region has a third layer disposed on a surface of the second layer, and
the third layer contains a resin.

9. A method of manufacturing a collector, comprising:
a step of forming a second layer by plating on a surface of a first layer that has a masked portion covered by a masking material; and
a step of removing the masking material,
wherein:
the first layer contains a light metal element, and
the second layer contains a metal element whose oxidation-reduction potential based on Li is 2.3 V or more and that is other than an amphoteric element.

10. The method of manufacturing a collector of claim 9, wherein the masking material is masking tape.

11. A battery comprising a structure in which a first collector, a first electrode layer, an intermediate layer, a second electrode layer and a second collector are disposed in that order,
wherein the first collector is the collector of any one of claim 1 through claim 8, is joined to the first electrode layer at the first region, and is joined to an electrode tab at the second region.

12. The battery of claim 11, further comprising an electrolyte liquid,
wherein the intermediate layer is a separator that is used in a battery that uses the electrolyte liquid.

13. The battery of claim 11, wherein the intermediate layer contains a solid electrolyte.

14. The battery of claim 11, wherein:
the first electrode layer contains an electrode active material, and
oxidation-reduction potential based on Li of the electrode active material is 0.3 V or less.

15. The battery of claim 14, wherein the electrode active material contains at least one selected from the group consisting of Si and C.
